# EUROPÄISCHE PATENTSCHRIFT

(11) **EP 3 078 511 B1**
(45) Veröffentlichungstag und Bekanntmachung des Hinweises auf die Patenterteilung: **31.01.2018**
(21) Anmeldenummer: 16163496.9
(22) Anmeldetag: 01.04.2016
(51) Int. Cl.: B60C 23/04

(54) **VERFAHREN ZUM BETREIBEN EINES REIFENDRUCKKONTROLLSYSTEMS**
METHOD FOR OPERATING A TIRE PRESSURE MONITORING SYSTEM
PROCEDE DESTINE AU FONCTIONNEMENT D'UN SYSTEME DE CONTROLE DE LA PRESSION DES PNEUS

(30) Priorität: 09.04.2015 DE 102015105444
(43) Veröffentlichungstag der Anmeldung: 12.10.2016
(73) Patentinhaber: Huf Hülsbeck & Fürst GmbH & Co. KG, 42551 Velbert (DE)
(72) Erfinder: Heller, Norbert, 47929 Grefrath (DE); Alexander, Markus, 76287 Rheinstetten (DE); Kessler, Ralf, 76327 Pfinztal (DE); Kienzle, Thomas, 74354 Besigheim (DE); Dementyev, Yevgen, 42287 Wuppertal (DE); Eggers, Thomas, 42929 Wermelskirchen (DE); Wagner, Markus, 71638 Ludwigsburg (DE)
(74) Vertreter: Twelmeier Mommer & Partner

(56) Entgegenhaltungen:
- WO-A1-2009/081425
- US-A1- 2008 205 553
- US-B1- 6 430 484

## Beschreibung

Die Erfindung geht von einem Verfahren mit den im Oberbegriff des Patentanspruchs 1 angegebenen Merkmalen aus. Ein solches Verfahren ist z. B. aus der EP 2 470 381 B1 sowie aus US 6 430 484 B1 bekannt. Das Verfahren befasst sich mit einem Reifendruckkontrollsystem für Fahrzeuge, die Räder haben, welche mit einer als Radelektronik bezeichneten Einrichtung ausgestattet sind, welche einen Drucksensor zum Messen des Reifendrucks, mindestens einen weiteren Sensor zum Messen mindestens einer weiteren Messgröße, eine elektronische Steuereinheit, einen Sender und eine elektrische Stromquelle hat. Neben einem Drucksensor zum Messen des Reifendrucks kommen als weitere Sensoren z. B. Beschleunigungssensoren, die an der Radelektronik auftretende Beschleunigungen messen, ein Temperatursensor, der die Temperatur in der Radelektronik misst, ein Sensor zum Erkennen der Drehrichtung des Rades, ein Sensor zur Bestimmung des Ladezustands einer Batterie, welche als Stromquelle in der Radelektronik vorgesehen sein kann, und andere in Betracht. Die Ausgangssignale der Sensoren werden einer elektronischen Steuereinheit zugeführt, die z. B. ein Mikrocontroller, ein Mikroprozessor oder ein anwendungsspezifischer integrierter Schaltkreis (ASIC) sein kann, welcher die von den Sensoren gelieferten Messwerte verarbeitet, z. B. aus Druckmesswerten Differenzen bildet, und/oder sie mit Grenzwerten vergleicht und jedenfalls entweder die von den Sensoren gelieferten Messwerte oder davon abgeleitete Größen digitalisiert, um sie mit Hilfe des in der Radelektronik vorgesehenen Senders in Form von digitalisierten Daten an einen im Fahrzeug oder am Fahrzeug angebrachten Empfänger zu übermitteln, wo die Daten ausgewertet und erforderlichenfalls Warnmeldungen an den Fahrer des Fahrzeugs abgegeben werden, z. B. Warnungen bezüglich eines zu niedrigen oder eines fortschreitend abnehmenden Reifendrucks.

Die digitalen Daten werden in Telegramme eingebunden an den Empfänger übertragen. Diese Telegramme enthalten Angaben zu den von den Sensoren gewonnenen Messgrößen bzw. zu davon abgeleiteten Daten in einer vorher festgelegten Reihenfolge. Darüber hinaus kann am Beginn des Telegramms eine Präambel vorgesehen sein, die den Beginn des Telegramms kennzeichnet. Am Ende des Telegramms kann eine Postambel vorgesehen sein, die das Ende des Telegramms kennzeichnet. Außerdem kann das Telegramm Angaben über die im Telegramm verwendete Codierung der digitalen Daten, meistens eine Manchester-Codierung, enthalten. Schließlich enthält das Telegramm auch eine Kennung, welche die jeweilige Radelektronik individualisiert, von welcher das Telegramm ausgesendet worden ist. Diese Kennung ermöglicht es dem Empfänger, festzustellen, von welchem Rad des Fahrzeugs das Telegramm kommt.

Die Radelektronik ist typischerweise entweder am Ventil des Reifens, an der Innenseite des Reifens oder unter dem Reifen an der Felge des Rades angebracht und rotiert mit dem Rad. Die Antenne des Empfängers, welche die Telegramme empfangen soll, ist meist an der Unterseite des Fahrzeugbodens angebracht.

Die US 6,430,484 B1 offenbart ein Verfahren zum Übertragen von Daten aus einer Radelektronik zu einem an der Karosserie des Fahrzeugs vorgesehenen Empfänger, in welchem aufeinanderfolgend drei unterschiedliche Telegramme übertragen werden, die sich im Umfang der übertragenen Daten unterscheiden. Eines der drei Telegramme enthält alle von der Radelektronik zu übertragenden Daten, ein zweites, verkürztes Telegramm enthält einen Teil der mit dem unverkürzten Telegramm übertragen Daten nicht, und ein drittes Telegramm, welches gegenüber dem zweiten Telegramm verkürzt ist, enthält einen Teil der mit dem zweiten Telegramm übertragenen Daten nicht. Eine Aufteilung der zu übertragenden Daten auf die drei Telegramme findet nicht statt.

Die US 2008/0205553 A1 offenbart ein Verfahren zum Wiederherstellen von Daten, die bei der Übertragung aus einer Radelektronik an einen Empfänger verlorengegangen sind.

Die WO 2009/081425 A1 offenbart ein Verfahren, in welchem der Empfänger eines Reifendruckkontrollsystems die Radelektroniken so steuert, dass sie in einem Zeitfenster senden, in dem die Gefahr von Übertragungsfehlern minimal ist.

Wie gut ein Telegramm empfangen wird, hängt u. a. von der Stellung der Radelektronik relativ zur Antenne des Empfängers ab, und da diese sich durch die Rotation des Rades laufend ändert, kommt es vor, dass nicht jedes Telegramm vollständig empfangen wird. Es ist deshalb bekannt, die Telegramme wiederholt zu senden, um sicher zu sein, dass wenigstens eines der Telegramme vollständig und lesbar empfangen wird. Der Nachteil dabei ist, dass jede Übermittlung eines Telegramms elektrische Energie verbraucht. Da die meisten Reifendruckkontrollsysteme Radelektroniken haben, die durch eine in ihr vorgesehene Batterie betrieben werden, die nicht austauschbar in der Radelektronik untergebracht ist, gleichwohl aber typischerweise eine Lebensdauer von bis zu 10 Jahren haben soll, kommt einem sparsamen Energieverbrauch besondere Bedeutung zu.

Nicht nur das sich drehende Rad kann dazu führen, dass ein Telegramm unvollständig empfangen wird, z. B. weil während der Dauer der Übermittlung des Telegramms zwischen Sender und Empfänger ein Funkschatten bestehen kann. Hinzu kommt, dass mit zunehmender Ausrüstung eines Fahrzeugs mit Sensoren, welche den Motor, Bremssysteme, das Fahrverhalten überwachen sowie Spurhaltesysteme, Navigationssysteme und dergleichen mehr unterstützen, eine zunehmende Anzahl von potentiellen Störfaktoren vorhanden ist, die einen ungehinderten Empfang von Funksignalen der Radelektroniken stören können. Auch das ist ein Grund, warum sicherheitshalber die Telegramme nicht nur einmal, sondern wiederholt gesendet werden.

Der vorliegenden Erfindung liegt die Aufgabe zugrunde, eine Möglichkeit aufzuzeigen, wie trotz dieser störenden Randbedingungen ohne Einbuße an Zuverlässigkeit der Reifendrucküberwachung elektrische Energie für das Betreiben der Radelektroniken gespart und dadurch die Lebensdauer der Batterie gesteigert werden kann.

Diese Aufgabe wird durch ein Verfahren mit den im Patentanspruch 1 angegebenen Merkmalen gelöst. Vorteilhafte Weiterbildungen der Erfindung sind Gegenstand der Unteransprüche.

Erfindungsgemäß werden in einem Verfahren der eingangs genannten Art die von der Radelektronik in ersten Zeitabständen zu übertragenden Daten nicht in einem einzigen Telegramm übertragen, vielmehr werden sie auf mindestens zwei Telegramme aufgeteilt, die in einem vorgegebenen zweiten Zeitabstand aufeinander folgen, welcher im Empfänger gespeichert und von den ersten Zeitabständen verschieden ist. Im Empfänger werden die zwischen den eintreffenden Telegrammen liegenden Zeitabstände erfasst und solche Telegramme, die in dem für eine Radelektronik gespeicherten zweiten Zeitabstand aufeinander folgen, als zusammengehörend dieser Radelektronik zugeordnet. Trotz der Aufteilung auf mehrere Telegramme kann für den Betrieb der Radelektronik elektrische Energie gespart werden, weil die Telegramme, auf welche die zu übertragenden Daten aufgeteilt werden, kürzer sind als ein Telegramm, welches die Gesamtheit der in den ersten Zeitabständen zu übertragenden Daten enthält. Je kürzer das Telegramm ist, desto höher ist die Wahrscheinlichkeit, dass der Empfänger das komplette Telegramm erfolgreich empfängt. Für ein kurzes Telegramm ist es weniger wahrscheinlich, dass sich die Radelektronik durch Drehen des Rades in einen Funkschatten hineinbewegt, als für ein langes Telegramm. Für ein kurzes Telegramm ist es auch weniger wahrscheinlich, dass es durch andere Störquellen im Fahrzeug beeinträchtigt wird, als für ein langes Telegramm. Durch die Aufteilung der zu übertragenden Daten auf wenigstens zwei Telegramme kann deshalb die Anzahl der Wiederholungen der Übermittlung der zu übertragenden Daten verringert oder auf Wiederholungen ganz verzichtet werden. Daraus ergibt sich eine entsprechende wesentliche Verringerung des Verbrauchs von elektrischer Energie, denn der Sendevorgang ist der am meisten Energie verbrauchende Vorgang in einer Radelektronik.

Im Normalbetrieb einer Radelektronik, der vorliegt, wenn diese keinen schnellen Druckabfall feststellt, sendet sie z. B. einmal pro Minute die Gesamtheit der zu übertragenden Daten, und zwar im Stand der Technik in einem einzigen Telegramm zusammengefasst, erfindungsgemäß jedoch aufgeteilt auf mehrere Telegramme. Die ersten Zeitabstände wären in diesem Beispiel ca. 1 Minute lang. Die zweiten Zeitabstände, in denen jene Telegramme aufeinander folgen, auf die die Gesamtheit der in den ersten Zeitabständen zu übertragenden Daten aufgeteilt wird, sollen wesentlich kürzer sein als die ersten Zeitabstände und liegen vorzugsweise im Bereich < 10 ms. Sollte sicherheitshalber vorgesehen sein, die Übertragung der Gesamtheit der Daten zu wiederholen, dann wird die Folge der Telegramme, auf die die Gesamtheit der Daten erfindungsgemäß aufgeteilt ist, en bloc wiederholt, wobei die Zeitspanne zwischen je zwei en-bloc-Übertragungen der aufgeteilten Gesamtheit von Daten möglichst kurz sein sollte, jedenfalls aber verschieden von den zweiten Zeitabständen zwischen den einzelnen Telegrammen eines Blocks, auf welche die zu übertragenden Daten erfindungsgemäß aufgeteilt sind.

Der zweite Zeitabstand muss für die verschiedenen Radelektroniken eines Fahrzeugs nicht unterschiedlich gewählt werden. Da die Radelektroniken eines Fahrzeugs üblicherweise autonom arbeiten, unabhängig voneinander senden und sich die Sendezeitpunkte zwischen den einzelnen Rädern gegeneinander verschieben können, kann das erfindungsgemäße Verfahren durchaus mit zweiten Zeitabständen arbeiten, die für die verschiedenen Radelektroniken eines Fahrzeugs gleich gewählt sind. Vorzugsweise werden die zweiten Zeitabstände für die verschiedenen Radelektroniken eines Fahrzeugs jedoch unterschiedlich gewählt; dabei sollen sie aber für jede individuelle Radelektronik gleich bleiben. Das Wählen unterschiedlicher zweiter Zeitabstände für die Radelektroniken eines Fahrzeugs bietet neben dem Vorsehen einer im Telegramm mitübertragenen Kennung eine weitere Möglichkeit, anhand der gesendeten Telegramme festzustellen, von welcher Radelektronik und von welchem Rad sie stammen.

Es wäre unzweckmäßig, die in den ersten Zeitabständen zu übertragenden Daten völlig willkürlich auf mehrere Telegramme aufzuteilen. Daten, welche zu einem bestimmten Messwert oder zu einer davon abgeleiteten Größe gehören, sollten nicht auf mehrere Telegramme aufgeteilt werden. Vorzugsweise wird der Reifendruck jeweils im ersten Telegramm einer Folge von Telegrammen übertragen, die in dem zweiten Zeitabstand aufeinander folgen. Die Kennung der Radelektronik wird vorzugsweise im letzten Telegramm einer Folge von Telegrammen übertragen, welche in dem zweiten Zeitabstand aufeinander folgen.

Vorzugsweise enthalten die in den ersten Zeitabständen zu sendenden Folgen von Telegrammen, welche in der jeweiligen Folge in den zweiten Zeitabständen aufeinander folgen und auf welche die von einer individuellen Radelektronik in den ersten Zeitabständen zu übertragenden Daten aufgeteilt werden, jeweils nur zwei Telegramme, d. h. die Daten werden jeweils nur auf zwei Telegramme aufgeteilt. Damit lässt sich bereits eine erhebliche Einsparung an elektrischer Energie erreichen.

Vorzugsweise wird im letzten Telegramm einer Folge von Telegrammen, die in dem zweiten Zeitabstand aufeinander folgen, nur die Kennung der jeweiligen Radelektronik übertragen. Besonders vorteilhaft ist es, wenn die Kennung z. B. durch einen Algorithmus verkürzt wird und die verkürzte Kennung anstelle der unverkürzten Kennung übertragen wird. Das ist vorteilhaft, weil im Hinblick auf die im Umlauf befindliche immense Zahl von Reifendruckkontrollsystemen die individuellen Kennungen immer länger geworden sind, um sicherzustellen, dass keine Kennung mehr als einmal vorhanden ist. Für die Übertragung einer Kennung benötigt man heute typisch 4 Bytes. Durch Verkürzung, z. B. durch Bilden der Quersumme der Kennung, kann man erreichen, dass für deren Übertragung nur noch 1 Byte benötigt wird, so dass für die Übertragung der Kennung 3 Bytes eingespart werden können. Die Übertragung der restlichen Daten wie Druck, Temperatur, Drehzahl, Drehrichtung, Art der Codierung usw. benötigt im Telegramm typisch noch einmal etwa 12 Byte, so dass insgesamt gesehen durch die Verkürzung der Kennung ca. 20 % Energie eingespart und damit die Batterielebensdauer entsprechend erhöht werden kann. Angesichts der Verkürzung der Kennung ist zwar nicht mehr ausgeschlossen, dass der Empfänger eines Fahrzeugs in seltenen Fällen einmal ein kennungsgleiches Signal von einem anderen Fahrzeug empfängt, doch ist das angesichts des Vorteils der Energieeinsparung ohne Weiteres hinnehmbar. Die Unterscheidung der Radelektroniken am eigenen Fahrzeug voneinander ist jedoch trotz der Verkürzung gewährleistet.

Die Verkürzung der Kennung z. B. durch Bilden der Quersumme der Kennung hat noch einen weiteren Vorteil, denn sie hält Dritte davon ab, ein Reifendruckkontrollsystem mit Hilfe der vollständigen Kennung einer Radelektronik zu manipulieren und falsche Überwachungsmeldungen zu erzeugen.

## Patentansprüche

1. Verfahren zum Betreiben eines Reifendruckkontrollsystems für Fahrzeuge, die Räder haben, welche mit einer als Radelektronik bezeichneten Einrichtung ausgestattet sind, welche
- einen Drucksensor zum Messen des Reifendrucks,
- mindestens einen weiteren Sensor zum Messen mindestens einer weiteren Messgröße,
- eine elektronische Steuereinheit,
- einen Sender und
- eine elektrische Stromquelle hat
und von den Sensoren gelieferte Messwerte und/oder davon abgeleitete Größen und gegebenenfalls Daten sowie eine die jeweilige Radelektronik individualisierende Kennung
in Form von digitalen Daten drahtlos an einen im oder am Fahrzeug angebrachten Empfänger übermittelt, und zwar eingebunden in Telegramme, welche von dem Sender in ersten Zeitabständen an den Empfänger übertragen werden,
**dadurch gekennzeichnet, dass** die von der Radelektronik zu übertragenden Daten auf mindestens zwei Telegramme aufgeteilt werden, die in einem vorgegebenen zweiten Zeitabstand aufeinander folgen, welcher im Empfänger gespeichert und von den ersten Zeitabständen verschieden ist,
und dass im Empfänger die zwischen den eintreffenden Telegrammen liegenden Zeitabstände erfasst und solche Telegramme, die in dem für eine Radelektronik gespeicherten zweiten Zeitabstand aufeinander folgen, als zusammengehörend dieser Radelektronik zugeordnet werden.

2. Verfahren nach Anspruch 1, **dadurch gekennzeichnet, dass** die ersten Zeitabstände länger sind als der zweite Zeitabstand.

3. Verfahren nach Anspruch 1 oder 2, **dadurch gekennzeichnet, dass** der zweite Zeitabstand für die verschiedenen Radelektroniken unterschiedlich gewählt wird, für jede individuelle Radelektronik aber gleich bleibt.

4. Verfahren nach einem der vorstehenden Ansprüche, **dadurch gekennzeichnet, dass** zu übertragende digitale Daten, welche zu einem bestimmten Messwert oder zu einer davon abgeleiteten Größe gehören, nicht auf mehrere Telegramme aufgeteilt werden.

5. Verfahren nach einem der vorstehenden Ansprüche, **dadurch gekennzeichnet, dass** der Reifendruck jeweils im ersten Telegramm einer Folge von Telegrammen übertragen wird, die in dem zweiten Zeitabstand aufeinander folgen.

6. Verfahren nach einem der vorstehenden Ansprüche, **dadurch gekennzeichnet, dass** die Kennung im letzten Telegramm einer Folge von Telegrammen übertragen wird, welche in dem zweiten Zeitabstand aufeinanderfolgen.

7. Verfahren nach einem der vorstehenden Ansprüche, **dadurch gekennzeichnet, dass** die von einer individuellen Radelektronik in den ersten Zeitabständen zu sendenden Folgen von Telegrammen jeweils nur zwei Telegramme enthalten, auf welche die insgesamt zu übertragenden Daten aufgeteilt werden.

8. Verfahren nach einem der vorstehenden Ansprüche, **dadurch gekennzeichnet, dass** im letzten Telegramm einer Folge von Telegrammen, die in dem zweiten Zeitabstand aufeinander folgen, nur die Kennung der jeweiligen Radelektronik übertragen wird.

9. Verfahren nach einem der vorstehenden Ansprüche, **dadurch gekennzeichnet, dass** aus der Kennung eine verkürzte Kennung gebildet und nur diese anstelle der unverkürzten Kennung übertragen wird.

10. Verfahren nach einem der vorstehenden Ansprüche, **dadurch gekennzeichnet, dass** die in den ersten Zeitabständen zu übertragenden Telegramme, welche in den zweiten Zeitabständen aufeinander folgen, wiederholt werden.

## Claims

1. A method for operating a tyre pressure monitoring system for vehicles which have wheels equipped with a unit referred to as a wheel electronics unit, which has
- a pressure sensor for measuring the tyre pressure
- at least one further sensor for measuring at least one further measurand,
- an electronic control unit,
- a transmitter, and
- an electrical power source
and transmits measured values supplied by the sensors and/or variables derived therefrom and possibly data and an identifier individualising the particular wheel electronics unit
in the form of digital data wirelessly transmitted to a receiver mounted in or on the vehicle, more specifically incorporated in telegrams which are transmitted from the transmitter at first time intervals to the receiver, **characterised in that** the data to be transmitted by the wheel electronics unit is divided into at least two telegrams, which follow one another at a predefined second time interval, which is stored in the receiver and is different from the first time intervals,
and **in that** the time intervals between the relevant telegrams are detected in the receiver and telegrams which follow one another in the second time interval stored for a wheel electronics unit are assigned to this wheel electronics unit as belonging together.

2. The method according to claim 1, **characterised in that** the first time intervals are longer than the second time interval.

3. The method according to claim 1 or 2, **characterised in that** the second time interval is selected to be different for the various wheel electronics units, but remains the same for each individual wheel electronics unit.

4. The method according to any one of the preceding claims, **characterised in that** digital data to be transmitted, which belong to a specific measured value or to a variable derived therefrom, are not divided over a plurality of telegrams.

5. The method according to any one of the preceding claims, **characterised in that** the tyre pressure is transmitted in each case in the first telegram of a sequence of telegrams which follow one another at the second time interval.

6. The method according to any one of the preceding claims, **characterised in that** the identifier is transmitted in the last telegram of a sequence of telegrams which follow one another at the second time interval.

7. The method according to any one of the preceding claims, **characterised in that** the sequences of telegrams to be transmitted by an individual wheel electronics unit at the first time intervals each contain only two telegrams over which the totality of data to be transmitted is divided.

8. The method according to any one of the preceding claims, **characterised in that** only the identifier of the particular wheel electronics unit is transmitted in the last telegram of a sequence of telegrams that follow one another at the second interval.

9. The method according to any one of the preceding claims, **characterised in that** a shortened identifier is formed from the identifier and only this is transmitted instead of the unshortened identifier.

10. The method according to any one of the preceding claims, **characterised in that** the telegrams which are to be transmitted at the first time intervals and which follow one another at the second time intervals are repeated.

## Revendications

1. Procédé destiné au fonctionnement d'un système de contrôle de la pression des pneus pour des véhicules, qui possèdent des roues, lesquelles sont équipées avec un dispositif désigné comme étant un système radio-électronique, lequel possède
- un capteur de pression pour la mesure de la pression du pneu,
- au moins un autre capteur pour la mesure d'au moins une autre grandeur de mesure,
- une unité de commande électronique,
- un émetteur et
- une source de courant électrique,
et transmet sans fil des valeurs de mesure délivrées par les capteurs et/ou des grandeurs en étant dérivées et éventuellement des données ainsi que un identificateur individualisé du système radio-électronique respectif sous la forme de données numériques transmises vers un récepteur dans ou rapporté sur le véhicule, et en l'occurrence, incorporées dans des télégrammes, lesquels sont transmis vers le récepteur dans des premiers intervalles de temps,
**caractérisé en ce que** les données à transmettre par le système radio-électronique se partagent sur au moins deux télégrammes qui se suivent dans un deuxième intervalle de temps prédéfini, lequel est enregistré dans le récepteur et est différent du premier intervalle de temps,
et que, dans le récepteur, les intervalles de temps situés entre les télégrammes entrants sont détectés et les télégrammes qui se suivent dans le deuxième intervalle de temps enregistré pour un système radio-électronique sont associés à ce système radio-électronique comme étant correspondants.

2. Procédé selon la revendication 1, **caractérisé en ce que** les premiers intervalles de temps sont plus longs que le deuxième intervalle de temps.

3. Procédé selon la revendication 1 ou 2, **caractérisé en ce que** le deuxième intervalle de temps est choisi de manière différente pour les différents systèmes radio-électroniques, mais reste identique pour chaque système radio-électronique.

4. Procédé selon l'une quelconque des revendications précédentes, **caractérisé en ce que** des données numériques à transmettre, lesquelles correspondent à une valeur de mesure donnée ou à une grandeur qui en est dérivée, ne sont pas partagées sur plusieurs télégrammes.

5. Procédé selon l'une quelconque des revendications précédentes, **caractérisé en ce que** la pression du pneu est transmise respectivement dans le premier télégramme d'une suite de télégrammes, qui se suivent les uns les autres dans le deuxième intervalle de temps.

6. Procédé selon l'une quelconque des revendications précédentes, **caractérisé en ce que** l'identificateur est transmis dans le dernier télégramme d'une suite de télégrammes, lesquels se suivent les uns les autres dans le deuxième intervalle de temps.

7. Procédé selon l'une quelconque des revendications précédentes, **caractérisé en ce que** les suites à envoyer à partir d'un système radio-électronique individuel dans les premiers intervalles de temps contiennent respectivement uniquement deux télégrammes, dans lesquels sont partagées les données à transmettre au total.

8. Procédé selon l'une quelconque des revendications précédentes, **caractérisé en ce que**, dans le dernier télégramme d'une suite de télégrammes qui se suivent les uns les autres dans le deuxième intervalle de temps, uniquement l'identificateur du système radio-électronique correspondant est transmis.

9. Procédé selon l'une quelconque des revendications précédentes, **caractérisé en ce qu'**à partir de l'identificateur, un identificateur raccourci est formé et qu'uniquement celle-ci est transmis à la place de l'identificateur non raccourci.

10. Procédé selon l'une quelconque des revendications précédentes, **caractérisé en ce que** les télégrammes à transmettre dans les premiers intervalles de temps, lesquels se suivent les uns les autres dans les deuxièmes intervalles de temps, sont répétés.
